# EUROPEAN PATENT APPLICATION

(11) **EP 4 711 710 A1**
(43) Date of publication of application: **18.03.2026**
(21) Application number: 24803513.1
(22) Date of filing: 09.05.2024
(51) Int. Cl.: G01C 15/00

(54) **LASER SCANNING METHOD, LASER SCANNING DEVICE, AND PROGRAM**

(30) Priority: 09.05.2023 JP 2023077403
(71) Applicant: Topcon Corporation, Tokyo 174-8580 (JP)
(72) Inventor: SASAKI, You, Tokyo 174-8580 (JP); SUGIMOTO, Hiroaki, Tokyo 174-8580 (JP)
(74) Representative: Schmitt-Nilson Schraud Waibel Wohlfrom Patentanwälte Partnerschaft mbB
(86) International application number: PCT/JP2024/017211
(87) International publication number: WO 2024/232404

(57) **Abstract**

The accuracy of surveying work using laser scanning is improved. A laser scanning method including performing: a first laser scan on a range including a reflective prism with a known position using a laser scanner (step S103); detection of the reflective prism based on scan data obtained by the first laser scan (step S106); and a second laser scan on the reflective prism in a state where a gradient portion of a light amount distribution of scanning light is widened compared to a case of the first laser scan (step S105).

## Description

### [Technical Field]

The present invention relates to laser scanning.

### [Background Art]

Surveying techniques using a laser scanner have been known (see Patent Literature 1 or other literature).

### [Citation List]

### [Patent Literature]

[Patent Literature 1] Japanese Patent Laid-Open No. 2022-152543

### [Summary of Invention]

### [Technical Problem]

In surveys using a laser scanner, a laser scan is performed at a survey site. Then, point cloud data obtained by the laser scan (laser scan data) is used to create 3D data or drawing data as post-processing.

This technique requires acquisition of laser scan data with high accuracy. In view of this background, the present invention aims to provide a technique for improving the accuracy of surveying work using laser scanning.

### [Solution to Problem]

The present invention is a laser scanning method including performing: a first laser scan on a range including a reflective prism with a known position using a laser scanner; detection of the reflective prism based on scan data obtained by the first laser scan; and a second laser scan on the reflective prism in a state where a gradient portion of a light amount distribution of scanning light is widened compared to a case of the first laser scan.

The present invention includes an aspect in which the second laser scan is performed on the reflective prism in a state where scanning density is increased compared to the case of the first laser scan. The present invention includes an aspect in which the second laser scan is performed under a condition that the reflective prism reflects a plurality of scanning light beams, and by calculating a center of gravity of directions of the reflective prism as viewed from the laser scanner that are weighted with reflection intensities of the scanning light beams, a direction of an optical center of the reflective prism as viewed from the laser scanner is calculated.

The present invention includes an aspect in which laser scanning light in the second laser scan is obtained by passing light in the first laser scan through an optical aperture. The present invention includes an aspect in which laser scanning light in the second laser scan has a beam shape in which a peak of a light amount distribution lowers and a skirt of a beam is widened in a radial direction of the beam compared to laser scanning light in the first laser scan.

The present invention includes an aspect in which laser scanning light in the second laser scan is capable of detecting reflected light from the reflective prism in a state where an optical axis of the laser scanning light deviates from a reflection surface of the reflective prism. The present invention includes an aspect in which a condition is set such that five or more reflection points, on the reflective prism, of laser scanning light in the second laser scan in a direction in which the gradient portion of the light amount distribution of the laser scanning light is widened are obtained at an expected maximum distance from the laser scanner to the reflective prism.

The present invention includes an aspect in which at an expected minimum distance from the laser scanner to the reflective prism, a beam diameter of scanning light in the second laser scan is larger than an effective prism diameter of the reflective prism, the effective prism diameter is equal to an objective diameter of the laser scanner divided by 2, and the beam diameter of the scanning light is defined as a range of light amount in a direction orthogonal to an optical axis in which effective reflected light is obtained from a reflector with the same reflectivity as the reflective prism at the minimum distance. The present invention includes an aspect in which a beam cross-section of laser scanning light in the second laser scan as viewed from a direction of an optical axis has an elongated shape, and an interval between beams of the scanning light in a direction orthogonal to a longitudinal direction of the elongated shape of the laser scanning light at the reflective prism is narrower than an interval between beams of the laser scanning light in the longitudinal direction.

The present invention includes an aspect in which a captured image of an object of the first laser scan is acquired, a depth map including predicted distance information of the object in the captured image from an image-capturing viewpoint is created, a point cloud image is created, the point cloud image being an image drawn by one or more points in viewing a point cloud obtained by the first laser scan from a viewpoint of the laser scan, and a point with abnormal distance information is detected by comparing a distribution of the predicted distance in the depth map with a distribution of a ranging value of each point in the point cloud image.

The present invention is a program read and executed by a computer, the program causing the computer to perform: a first laser scan on a range including a reflective prism with a known position using a laser scanner; detection of the reflective prism based on scan data obtained by the first laser scan; and a second laser scan on the reflective prism in a state where a gradient portion of a light amount distribution of scanning light is widened compared to a case of the first laser scan.

The present invention is a laser scanning device comprising: a target detection unit that, based on scan data obtained by a first laser scan on a range including a reflective prism with a known position using a laser scanner, detects the reflective prism; and a scanning condition setting unit that sets a condition for a second laser scan on the reflective prism in a state where a gradient portion of a light amount distribution of scanning light is widened compared to a case of the first laser scan.

The present invention is a laser scanning method including performing: a first laser scan using a laser scanner; capturing of a captured image of an object of the first laser scan; creation of a depth map including predicted distance information of the object in the captured image from an image-capturing viewpoint; creation of a point cloud image, the point cloud image being an image drawn by one or more points in viewing a point cloud obtained by the first laser scan from a viewpoint of the laser scan; and detection of a point with abnormal distance information by comparing a distribution of the predicted distance in the depth map with a distribution of a ranging value of each point in the point cloud image.

The present invention is a program read and executed by a computer, the program causing the computer to perform: acquisition of data of a first laser scan using a laser scanner; acquisition of data of a captured image of an object of the first laser scan; creation of a depth map including predicted distance information of the object in the captured image from an image-capturing viewpoint; creation of a point cloud image, the point cloud image being an image drawn by one or more points in viewing a point cloud obtained by the first laser scan from a viewpoint of the laser scan; and detection of a point with abnormal distance information by comparing a distribution of the predicted distance in the depth map with a distribution of a ranging value of each point in the point cloud image.

### [Advantageous Effects of Invention]

According to the present invention, it is possible to improve the accuracy of surveying work using laser scanning.

### [Brief Description of Drawings]

[Figure 1] Figure 1 is a conceptual diagram of an embodiment.
[Figure 2] Figure 2 is an exterior view of a laser scanner.
[Figure 3] Figure 3 is a block diagram of the laser scanner.
[Figure 4] Figure 4 is a block diagram of a computing device.
[Figure 5] Figure 5 is a flowchart illustrating an example of the procedure of a process.
[Figure 6] Figure 6 is a diagram illustrating a light amount distribution of scanning light.
[Figure 7] Figure 7 is a schematic diagram illustrating the effective prism diameter of a reflective prism.

### [Description of Embodiments]

### 1. First Embodiment

### (Overview)

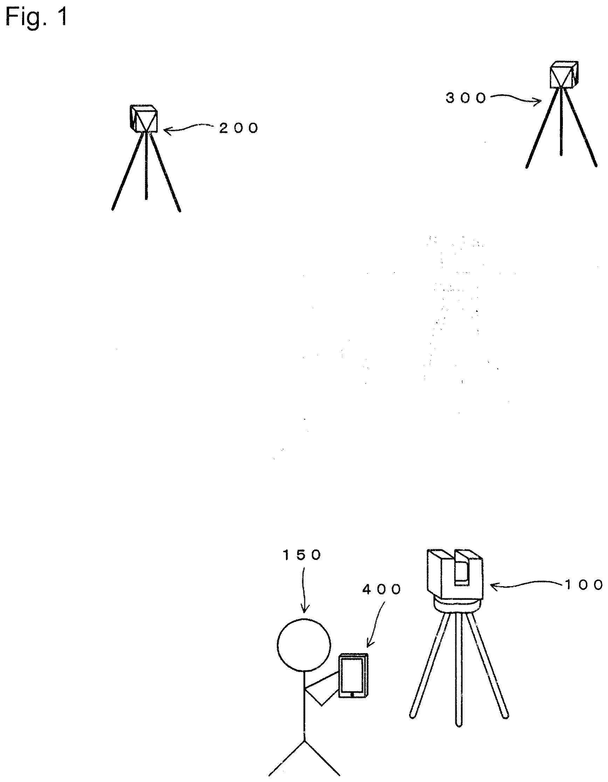

Figure 1 shows an overview of a survey site. A case of performing a laser scan to obtain three-dimensional data of the terrain will be described here. The survey object is not particularly limited, and may be any object or result of civil engineering work, or the exterior or interior of buildings or workpieces. Figure 1 shows a laser scanner 100, which is a device for a laser scan, reflective prisms 200 and 300, which are targets that give reference points, a worker (user) 150 who operates the laser scanner 100, and a tablet computer 400 carried by the worker 150.

The reflective prisms 200 and 300 are optical reflective targets for surveying that reflect incident light with its direction changed by 180°. Figure 1 shows an example of entire circumferential reflective prisms as the reflective prisms 200 and 300. The reflective prisms may be structured in a way that responds to incident light from a specific direction. Two or more reflective prisms are used in this example. A case of using two reflective prisms is shown here. In addition to the reflective prisms, any optical reflective target that has retroreflection characteristics and high reflectivity can be used as the target.

The tablet computer 400 is used as a computing device for various processes based on point cloud data acquired by the laser scanner 100. The functions of the tablet computer 400 can also be carried out by a personal computer (PC), a data processing server, or dedicated hardware. Further, it is also possible to employ a configuration in which the laser scanner 100 itself includes the functions of the tablet computer 400.

In this example, the first laser scan is performed on the entire circumference (the entire circumferential scan) in a state where the positions of the reflective prisms 200 and 300 in the absolute coordinate system or a specific local coordinate system are known and the position and posture of the laser scanner 100 are unknown. Although the entire circumferential scan is performed under a condition for obtaining point cloud data of objects to be measured, reflected light from the reflective prisms 200 and 300 is too strong under this condition, lowering the ranging accuracy of the reflective prisms 200 and 300 due to saturation of the light receiving element of the laser scanner 100.

Thus, the second laser scan (target scan) with a dimming filter inserted into the optical path is performed to obtain point cloud data of the reflective prisms 200 and 300 with ensured ranging accuracy. The reflective prisms 200 and 300 are identified based on the detected intensity of reflected light and/or a captured image.

Then, the directions of the optical centers of the reflective prisms 200 and 300 relative to the laser scanner 100 are calculated based on the point cloud data of the reflective prisms 200 and 300 obtained in the second laser scan. Here, the respective directions of a plurality of reflection points on the reflective prisms 200 and 300 as viewed from the laser scanner 100 are weighted with their reflection intensities, and the center of gravity of them is calculated. This allows statistical calculation of the directions of the optical centers of the reflective prisms 200 and 300 as viewed from the optical origin of the laser scanner 100. This process is performed inside the laser scanner 100.

The laser scanner 100 transmits, to the tablet computer 400, data of the direction and distance of each point from the laser scanner 100 obtained by the entire circumferential scan, data of the directions and distances of the optical center positions of the reflective prisms 200 and 300 from the laser scanner 100 obtained by the target scan, and identification information of the reflective prisms 200 and 300.

The tablet computer 400 performs the following process. Since the positions of the reflective prisms 200 and 300 in a coordinate system used here are known, the resection method based on the above data of the directions and distances of the optical center positions of the reflective prisms 200 and 300 from the laser scanner 100 can be used to determine the position and posture of the laser scanner 100 in that coordinate system. The position and posture of the laser scanner 100 in the coordinate system as determined in this way allow determination of the coordinates of each point obtained by the entire circumferential scan in the coordinate system. The tablet computer 400 performs this process.

Although the basic operation has been described above, the tablet computer 400 in this embodiment additionally performs a process of determining whether the point cloud data transmitted from the laser scanner 100 to the tablet computer 400 contains a range that requires another laser scan, a process of notifying the worker 150 of the result of this determination, and a process of determining a condition for a rescan to eliminate abnormalities.

### (Laser Scanner)

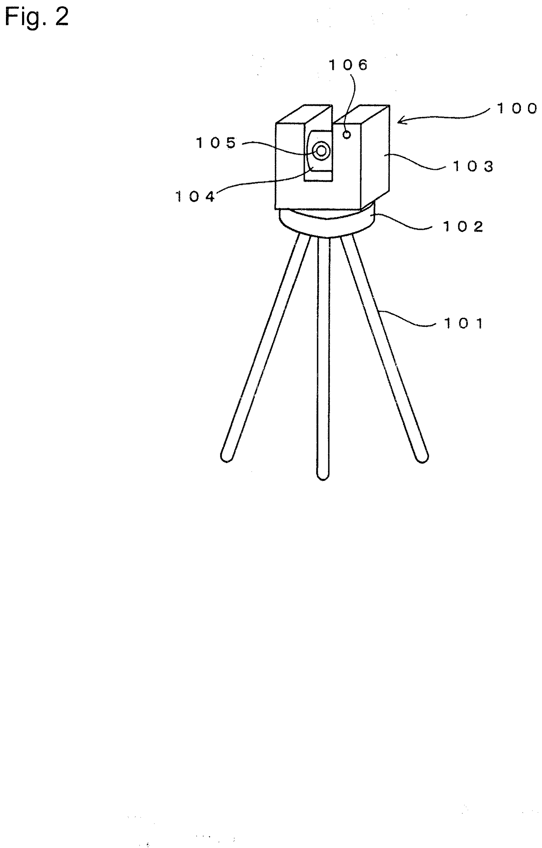

Figure 2 shows an exterior of the laser scanner (laser scanning device) 100. The laser scanner 100 includes a tripod 101 that is a leg part, a base part 102 fixed on top of the tripod 101, a horizontal rotating part 103 that is a rotating body capable of horizontal rotation (rotation with the vertical axis as the rotation axis) on the base part 102, and a vertical rotating part 104 that is a rotating body capable of vertical rotation (rotation with the horizontally extending axis as the rotation axis) relative to the horizontal rotating part 103. Further, the horizontal rotating part 103 has an unillustrated operation panel on its back.

It is also possible to operate the laser scanner 100 using a terminal (a remote control). In this case, the terminal and the laser scanner 100 wirelessly communicate with each other. Further, it is also possible to employ a configuration in which the tablet computer 400 in Figure 1 is used as an operating terminal.

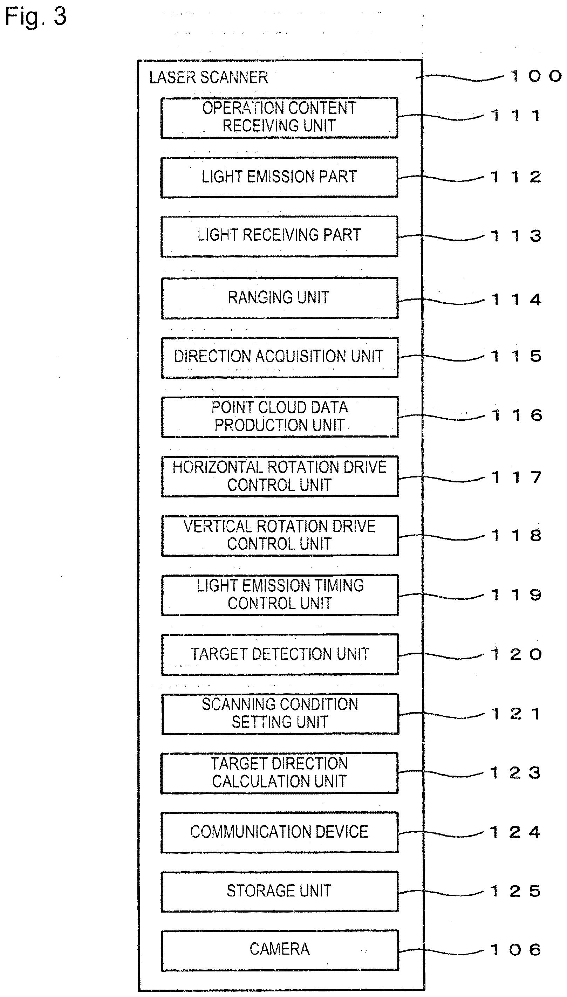

The vertical rotating part 104 includes an optical part 105 which is an optical system that emits and receives laser scanning light. The horizontal rotating part 103 includes a light emission part having a light emission element that emits pulsed scanning light (the reference numeral 112 in Figure 3, which will be described later), a light receiving part having a light receiving element (the reference numeral 113 in Figure 3, which will be described later), and an optical system that separates and combines the optical axes of outgoing light and incident light (detected light). Scanning light emitted from the light emission part passes through the above optical system, is reflected by an unillustrated mirror that vertically rotates with the vertical rotating part 104, and is emitted outward from the optical part 105. Scanning light reflected by an object to be measured enters the optical part 105, follows the path opposite to that of the above outgoing light, is separated by the above optical system, and is received by the light receiving part.

Vertical rotation of the vertical rotating part 104 vertically rotates the optical part 105. The optical part 105 emits pulsed laser scanning light. While the vertical rotating part 104 is rotating, this pulsed light is emitted in the direction (in the vertical plane) orthogonal to its rotation axis (the horizontally extending axis). In this case, the optical part 105 emits pulsed laser scanning light in the vertical angle direction (the direction of elevation and depression angles) .

A vertical scan is performed by emitting pulsed laser scanning light as described above while vertically rotating the vertical rotating part 104. A laser scan is performed on objects to be measured by emitting pulsed laser scanning light from the optical part 105 and receiving reflected light from the object with the optical part 105 while horizontally rotating the horizontal rotating part 103 and vertically rotating the vertical rotating part 104.

Horizontal rotation of the horizontal rotating part 103 at the same time as the above vertical scan shifts the line of the vertical scan in the horizontal angle direction (the horizontal direction). Note that when horizontal rotation is also performed at the same time as the vertical rotation, the vertical scan is not completely in the vertical angle direction but becomes a slightly but somewhat oblique line. Motors rotate the horizontal rotating part 103 and the vertical rotating part 104. An encoder precisely measures the horizontal rotation angle of the horizontal rotating part 103 and the vertical rotation angle of the vertical rotating part 104. Measuring these horizontal and vertical rotation angles allows measurement of the direction of the optical axis of the scanning light.

Each laser scanning light beam is a ray of pulsed ranging light. One laser scanning light beam is used for ranging of a scanned point, which is a reflection point hit by that laser scanning light beam. This ranging is performed according to the principle of well-known light wave ranging. This ranging value and the direction of emitting the laser scanning light allows calculation of the position of the scanned point (the reflection point of the laser scanning light) relative to the laser scanner 100.

Position data of a large number of scanned points constitutes point cloud data. Forms of point cloud data include a form in which data of the distance and direction of each point (each scanned point) is output. It is also possible to employ a form in which, inside the laser scanner 100, the position of each point in a specific coordinate system is calculated and the three-dimensional coordinate position of each point is output as point cloud data. Further, the point cloud data obtained by laser scanning also includes information on the luminance of each scanned point (the detected intensity of the reflected light).

The horizontal rotating part 103 includes a camera 106. The camera 106 is a digital still camera that captures still color images (RGB images). The positional relationship between the optical origin of the camera 106 (the center of the camera) and the optical origin of the laser scanner 100 and the relationship between the direction of the optical axis of the camera 106 and the direction of the optical axis of the laser scanner 100 are known.

Repeatedly and continuously capturing still images with the camera 106 while rotating the horizontal rotating part 103 allows for obtaining an entire circumferential image (a 360° surrounding panoramic image). Note that it is also possible to obtain a panoramic image of a specific range. It is also possible to employ a configuration in which the camera 106 captures video and frame images constituting the video are used.

### (Block Diagram of Laser Scanner)

Figure 3 is a block diagram of the laser scanner 100. The laser scanner 100 includes an operation content receiving unit 111, a light emission part 112, a light receiving part 113, a ranging unit 114, a direction acquisition unit 115, a point cloud data production unit 116, a horizontal rotation drive control unit 117, a vertical rotation drive control unit 118, a light emission timing control unit 119, a target detection unit 120, a scanning condition setting unit 121, a target direction calculation unit 123, a communication device 124, a storage unit 125, and the camera 106. A computer included in the laser scanner 100 implements the functional units with the reference numerals 111 and 114 to 125. Dedicated hardware may also constitute some or all of these functional units.

The operation content receiving unit 111 includes an operation panel (e.g., a touch panel or a touch panel display). The user operates the operation content receiving unit 111 to operate the laser scanner 100 or configure various settings. It is also possible to employ a configuration in which a terminal or a smartphone receives operation content.

The light emission part 112 includes a light emission element for emitting laser scanning light, an optical system, and a drive system for the light emission element. The light receiving part 113 includes a light receiving element that receives laser scanning light reflected by an object, an optical system, and a circuit that handles a detection signal output from the light receiving element.

The ranging unit 114 calculates the distance from the optical origin of the laser scanner 100 to a reflection point of laser scanning light based on the principle of light wave ranging. This is the same as the principle of regular laser rangefinders. The direction acquisition unit 115 acquires the direction of the optical axis of each laser scanning light beam from the horizontal rotation angle of the horizontal rotating part 103 and the vertical rotation angle of the vertical rotating part 104.

The point cloud data production unit 116 produces point cloud data that is data describing the position of each scanned point in a coordinate system with the position of the laser scanner 100 as the origin. For example, a group of data items on the direction and distance of each scanned point from the laser scanner 100 constitutes the point cloud data. The point cloud data is also associated with the detected intensity of reflected light from each scanned point.

The horizontal rotation drive control unit 117 controls driving of horizontal rotation of the horizontal rotating part 103. The vertical rotation drive control unit 118 controls driving of vertical rotation of the vertical rotating part 104. The light emission timing control unit 119 controls timing of light emission by the light emission element of the light emission part 112.

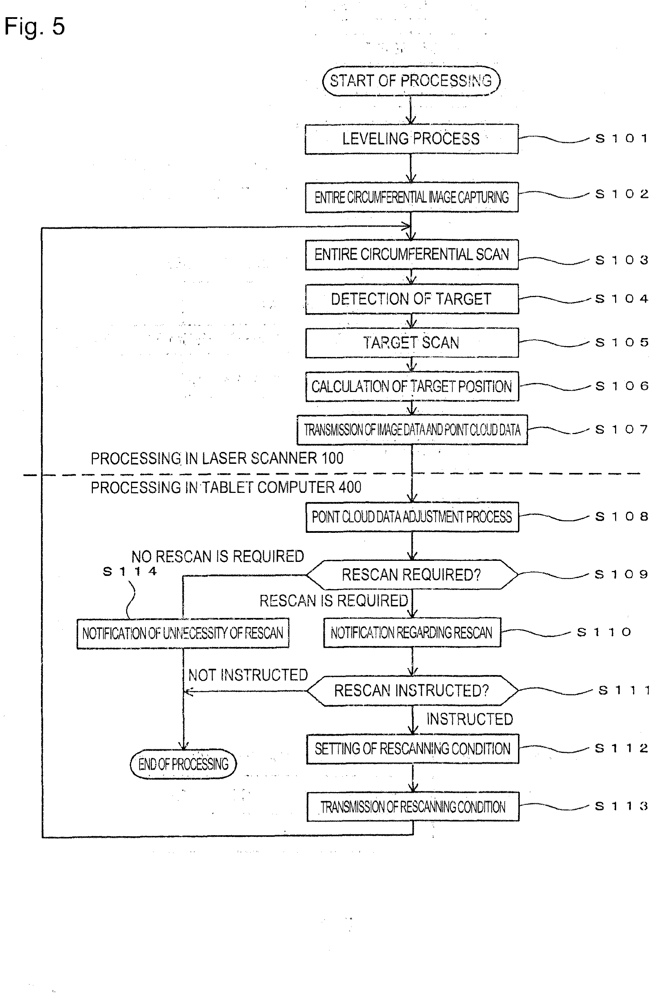

The target detection unit 120 detects the reflective prisms 200 and 300, which are targets, from within a laser-scanned point cloud obtained by the entire circumferential scan (step 103 in Figure 5), which is the first laser scan. This detection is performed as follows.

First, the entire circumferential scan in step S103 in Figure 5 is performed to obtain point cloud data of objects to be measured. The objects to be measured, which are terrain, buildings, roads, bridges, or other objects, have lower reflectivity of scanning light than the reflective prisms 200 and 300. Thus, the above entire circumferential scan is performed under a condition that allows detection of reflected scanning light from these objects to be measured. On the other hand, this scanning condition causes too strong reflected light from the reflective prisms 200 and 300, saturating the light receiving element of the light receiving part 113 and thus lowering the ranging accuracy.

Thus, points (reflection points) at which the output of the light receiving element exceeds a preset threshold are detected as points of reflected light from the reflective prisms 200 and 300. Further, since the output waveform of the light receiving element has a shape resulting from saturation (a shape whose top is clipped and thus flattened, and that leaves a tail on the time axis), it is also possible to employ a method of detecting the reflected light from the reflective prisms 200 and 300 by evaluating this waveform. Further, it is also possible to employ a method of combining these methods. These principles are used to detect the reflected light from the reflective prisms 200 and 300.

Further, detection based only on the detected intensity of reflected light can erroneously detect reflected light from mirrors or shiny metals, which are not the reflective prisms 200 and 300, as the reflective prisms 200 and 300. Thus, this example compares images captured by the camera 106 in the directions of reflected light beams determined to be those from the reflective prisms 200 and 300 with previously prepared images of the reflective prisms 200 and 300 to determine the genuineness of the reflected light beams determined to be those from the reflective prisms 200 and 300. This allows reliable acquisition of the directions of the reflective prisms 200 and 300 as viewed from the laser scanner 100.

Further, it is also possible to use a method of identifying reflected light from the reflective prisms 200 and 300 as follows. Here, the positions of the two reflective prisms 200 and 300 in the absolute coordinate system are known. Further, the separation L therebetween is known. Thus, two bright points with detected intensity exceeding a threshold and with a separation equal to L are detected as reflected light from the reflective prisms 200 and 300. The target detection unit 120 performs the above process.

The scanning condition setting unit 121 sets a scanning condition for the entire circumferential scan in step S103 in Figure 5 and a scanning condition for the target scan in step S105. Note that in the target scan in step S105, methods such as placing a dimming filter in front of the light emission element, placing a dimming filter in front of the light receiving element, reducing voltage applied to the light emission element, and combining these methods are used to perform a scan under the condition that the intensity of scanning light received by the light receiving element (scanning light reflected at a reflection point) is lowered compared to the case of the first entire circumferential scan (step S103). This ensures the accuracy of measuring the reflective prisms 200 and 300.

The target direction calculation unit 123 calculates the directions of the reflective prisms 200 and 300 as viewed from the laser scanner 100 based on the point cloud data obtained by performing the target scan.

The following will describe a process performed in the target direction calculation unit 123. First, the directions of the reflective prisms 200 and 300 as viewed from the laser scanner 100 have been known through the process in the target detection unit 120. However, their accuracy is not high. Here, light beams reflected from the directions of the reflective prisms 200 and 300 are extracted from the point cloud data obtained in the target scan. Normally, the scan density is set so that a plurality of reflection points occur on a single reflective prism, resulting in a plurality of reflected light beams from each reflective prism. Thus, the center of gravity of the angle values, measured by the laser scanner, of a plurality of points corresponding to the plurality of reflected light beams is calculated by statistical processing. In this case, the measured angle value of each point is weighted with the intensity of its reflected light, and the center of gravity of the measured angle values is calculated. The values of the centers of gravity of the measured angle values are obtained as the directions of the optical centers of the reflective prisms 200 and 300 as viewed from the laser scanner 100.

In this way, the directions of the reflective prisms 200 and 300 relative to the laser scanner 100 are obtained. The directions of the reflective prisms 200 and 300 obtained here are obtained as those in a coordinate system with the laser scanner 100 as the origin (the instrument coordinate system). On the other hand, the positions of the reflective prisms 200 and 300 in the absolute coordinate system (the global coordinate system) have been measured in advance as reference points and thus are known. Then, each reference point has been given a reference coordinate name (e.g., a specific code). This is for identifying the reference point on a drawing (map) of a survey site. Each of the reflective prisms 200 and 300 has an indication of this identification code, which is detected from within an image captured by the camera 106. This identification information, the position information of the reflective prisms 200 and 300 obtained by the above target scan, and the known position information of the reflective prisms 200 and 300 are associated with each other.

The target direction calculation unit 123 performs the above process.

The communication device 124 communicates with other equipment. The communication uses wireless lines, such as wireless LAN. Wired communication is also possible. The storage unit 125 stores various types of data handled in the operation of the laser scanner 100, operation programs, and obtained point cloud data.

### (Data Processing Device)

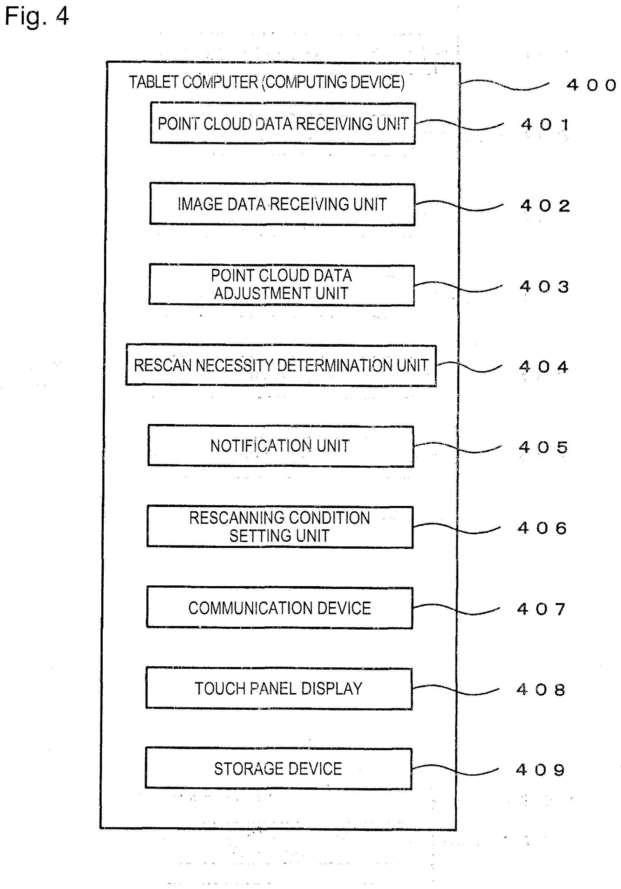

Figure 4 is a block diagram of a laser scanning data processing device (computing device) composed of the tablet computer 400 in Figure 1. The tablet computer 400 implements the following functional units: a point cloud data receiving unit 401, an image data receiving unit 402, a point cloud data adjustment unit 403, a rescan necessity determination unit 404, a notification unit 405, and a rescanning condition setting unit 406. The CPU of the tablet computer 400 executes a dedicated application program to implement these functional units. Further, the tablet computer 400 includes a communication device 407, a touch panel display 408, and a storage device 409.

The point cloud data receiving unit 401 receives point cloud data (laser-scanned point cloud) acquired by the laser scanner 100. This point cloud data is data in which the direction and distance of each point as viewed from the laser scanner 100 obtained by the entire circumferential scan (step S103 in Figure 5), which is the first laser scan, the measurement time, and the intensity of the received reflected light are associated with each other. Further, the point cloud data receiving unit 401 receives information on the directions of the optical centers of the reflective prisms 200 and 300 as viewed from the laser scanner 100 obtained by the target scan (step S105), which is the second laser scan, and the calculation of the target positions based thereon (step S106), and also receives the identification information of the reflective prisms 200 and 300.

The image data receiving unit 402 receives image data of an image captured by the camera 106. The point cloud data adjustment unit 403 performs removal of noise and a process of replacing data of points determined as abnormal data with data of points obtained by a rescan on the point cloud data received by the point cloud data receiving unit 401.

The rescan necessity determination unit 404 determines whether the point cloud data on which the point cloud data adjustment process has been performed contains a range that requires a rescan. Examples of a range that requires a rescan include a range in the point cloud that includes points with abnormal (too strong or too weak) intensity of received light, a range which is an area that should include reflection points but includes no (or fewer) reflection points in comparison to the image data, a range in the point cloud that includes points that have abnormal ranging values (that are suspected of multiple reflection), a range where the density of points (reflection points) is low, a range where detection of the target has failed, a range where the intensity of reflected light from the target is less than a specified value, a range where a notable event has been found in the point cloud, and a point cloud that satisfies a predetermined condition. These determinations use predetermined thresholds.

The notification unit 405 performs a process of reporting whether and why to perform a rescan. Specifically, a process of displaying the content of the notification on the touch panel display 408 is performed. The content of the notification is content that specifically conveys the content of the above determination to the worker 150. For example, the touch panel display 408 of the tablet computer 400 displays content such as "There is an area with insufficient density of points", "There is an unmeasured area", or "No target can be detected".

The rescanning condition setting unit 406 performs a process in step S112. A condition for a rescan is set in step S112 using the position and posture of the laser scanner 100 in the laser scans in step S103 and step S105. For example, too strong intensity of received light results in setting a condition for a dimmed scan with reduced intensity of incident light on the light receiving element. Further, for example, too weak intensity of received light results in setting a condition for a scan with increased intensity of incident light on the light receiving element (e.g., increased intensity of light emitted by the light emission element). Further, for example, an area that should include reflection points including no (or fewer) reflection points results in setting a condition for a scan with increased intensity of incident light on the light receiving element (e.g., increased intensity of light emitted by the light emission element).

Further, for example, an abnormal ranging value (which is suspected of multiple reflection) results in setting a condition for a dimmed scan with reduced intensity of incident light on the light receiving element. Reducing the intensity of received light can suppress the effect of weak multiple-reflected light. Further, for example, low density of points (reflection points) results in setting a scanning condition for increasing the density of points on the reflection surface using a scanning condition for decreasing the rotation speed of the horizontal rotating part and/or the vertical rotating part of the laser scanner, or a scanning condition for increasing the frequency of emitting scanning light.

The communication device 407 communicates with the laser scanner 100 and other equipment. The communication uses a wireless line. The touch panel display 408 receives various operations performed by the worker 150, displays various types of data, and displays notification information. The storage device 409 stores various types of data handled by the tablet computer 100, various functions of the tablet computer 100, and programs and data for executing various processes executed on the tablet computer 100.

### (Example of Processing)

The following will describe an example of processing. First, the premise of the processing will be described. The reflective prisms 200 and 300, which are targets that give reference points, are set up in the survey site in Figure 1 (a site where a laser scan is performed). Further, their positions (coordinate values) are known in the absolute coordinate system.

The position and posture of the laser scanner 100 in the absolute coordinate system is unknown. The laser scanner 100 has an electrically driven leveling function. Further, either a manual mode in which any data abnormality results in performing a process related to a rescan according to an instruction from the worker 150 or an automatic mode in which any data abnormality results in automatically performing a process related to a rescan with no instruction from the worker 150 can be set as an initial setting.

Setting up the laser scanner 100 in the survey site and starting it causes execution of the flowchart in Figure 5. Here, the laser scanner 100 performs steps S101 to S107, and the tablet computer 400 performs steps S108 to S113. A suitable storage medium stores the program for executing the flowchart in Figure 5. Further, a CPU of a computer that controls the operation of the laser scanner 100 and a CPU of the tablet computer 300 execute this program.

First, a leveling process is performed (step S101). In the leveling process, an electrically driven operation for ensuring the levelness of the laser scanner 100 is performed. Next, an entire circumferential image of the laser scanner 100 is captured (step S102).

This entire circumferential image capturing intermittently captures images with the camera 106 while rotating the horizontal rotating part 103 by 360° to obtain a panoramic image. It is also possible to perform this entire circumferential image capturing at the same time as the next entire circumferential scan (step S103). Note that when the range to be measured is limited (e.g., to a range of 120°) instead of 360°, images of that limited range are captured (images of the range to be measured are captured).

Next, an entire circumferential scan is performed (step S103). The entire circumferential scan is performed under a condition for acquiring point cloud data of objects to be measured. When a specific range is to be measured, the point cloud data in that range is employed from the point cloud data obtained by the entire circumferential scan. A laser scan limited to the specific area is also possible.

Next, reflected scanning light from the targets (the reflective prisms 200 and 300) is detected from the point cloud data obtained by the entire circumferential scan (step S104). The target detection unit 120 performs this process. This process takes advantage of the particularly strong intensity of the reflected light from the reflective prisms 200 and 300 to identify the reflected light from the reflective prisms 200 and 300.

Detection of the reflective prisms 200 and 300 is followed by a laser scan (target scan) (step S105) in which the detected intensity of scanning light (the intensity of reflected light incident on the light receiving element) is reduced. The target scan (step S105) lowers the intensity of received light at the light receiving element compared to the case of the entire circumferential scan (step S103) by placing a dimming filter in front of the light receiving element or placing a dimming filter in front of the light emission element.

This is because the condition for the entire circumferential scan in step S103 causes too strong intensity of reflected light from the reflective prisms 200 and 300, saturating the light receiving element and thus lowering the accuracy of ranging data of the reflective prisms 200 and 300. Compared to the case of the entire circumferential scan (step S103), lowering the intensity of received light at the light receiving element reduces the saturation in the light receiving element, thus allowing for ensuring the accuracy of ranging data of the reflective prisms 200 and 300.

There are several methods in terms of how much to lower the incident light on the light receiving element. A first method is a method of determining the degree of dimming (attenuation amount) in advance. A second method is a method of determining the degree of dimming according to the intensity of reflected light from the reflective prisms detected in step S104. In this case, a dimming filter with a variable attenuation amount is employed.

The target scan (step S105) allows accurate measurement of the positions of the reflective prisms 200 and 300, which are the targets. The results of the target scan are used to calculate the position and posture of the laser scanner 100 based on the resection method.

In the target scan (step S105), a laser scan is performed on the entire circumference and only point cloud data of the targets (the reflective prisms 200 and 300) obtained in step S104 is extracted. Alternatively, a laser scan limited to the directions of the reflective prisms 200 and 300 obtained in step S104 is performed.

Further, the target scan (step S105) employs a scanning condition under which the scanning density is increased and the gradient portion of the light amount distribution of the scanning light is enlarged compared to the case of the entire circumferential scan in step S103. The number of scanned points per unit area defines the scanning density.

First, a description will be provided about increasing the scanning density. Here, decreasing the horizontal rotation speed of the horizontal rotating part 103 and the vertical rotation speed of the vertical rotating part 104 compared to those in step S103 without changing the frequency of emitting the scanning light increases the scanning density in step S105 compared to the scanning density in step S103. Note that it is also possible to change the scanning density by adjusting the frequency of emitting the scanning light.

Here, the above condition is set so that five to seven or more scanned points (reflection points of the scanning light) from the reflective prisms (targets) 200 and 300 detected in step S104 are present in the direction in which the Gaussian distribution of the scanning light spreads out (the direction in which the beam skirt is widened).

The following will describe a specific example of setting the scan density. Here, assume that the distance from the laser scanner to a reflective prism is up to 100 m. Here, the horizontal rotation speed of the horizontal rotating part 103 and the vertical rotation speed of the vertical rotating part 104 described above are set so that five to seven or more points of reflected light of prism scanning light from a reflective prism at a distance of 100 m are present in the direction in which the Gaussian distribution spreads out.

For example, when the cross-section of the beam is circular, the horizontal rotation speed of the horizontal rotating part 103 and the vertical rotation speed of the vertical rotating part 104 are set so that 5×5 reflection points can be obtained from a reflective prism at a distance of 100 m.

The number of five has the following meaning. To achieve accuracy in the calculation of the center of gravity, which will be described later, the distribution of reflected scanning light beams (distribution of points) from a reflective prism must have enough points to draw the outline of a Gaussian distribution. Under this condition, the number of points in the direction in which the Gaussian distribution of the beam spreads out (the direction in which the skirt is widened) needs to be three at minimum, and generally needs to be five or more. For this reason, the above condition of five to seven points is employed.

In general, the scan density in the target scan (step S105) set using the above method is higher than the scan density in the entire circumferential scan in step S103. Thus, the horizontal rotation speed of the horizontal rotating part 103 and the vertical rotation speed of the vertical rotating part 104 in the laser scan in step S105 are lower than those in the laser scan in step S103. Note that setting the maximum value of the distance from the laser scanner to a reflective prism to 100 m is an example, and it is also possible to set the maximum value to a condition such as 50 m or 70 m.

The optical center position (hereinafter referred to as the optical center) of a reflective prism is set as a matter of design. Although a reflective prism has a certain size, the optical axis of the scanning light does not necessarily coincide with this optical center. Thus, the scanning condition is adjusted so that a plurality of scanning light beams enter a reflective prism to obtain a large number of reflection points. Then, the directions of a plurality of reflection points as viewed from the laser scanner are weighted with their reflection intensities, and the center of gravity of them is calculated. This allows calculation of the direction of the optical center of the reflective prism as viewed from the laser scanner with the highest possible accuracy. To improve this measurement accuracy, the scan density is set in the above target scan (step S105). In other words, securing a large number of scanned points from the reflective prism increases the accuracy of calculating the direction of the optical center of the reflective prism as viewed from the laser scanner by calculating the center of gravity as described above.

Next, a description will be provided about widening the gradient portion of the light amount distribution. In addition to improving the accuracy of measuring the angle of the reflective prism by increasing the number of scanned points as described above, this embodiment widens (enlarges) the gradient portion of the light amount distribution in the direction orthogonal to the optical axis of the scanning light compared to the entire circumferential scan in step S103.

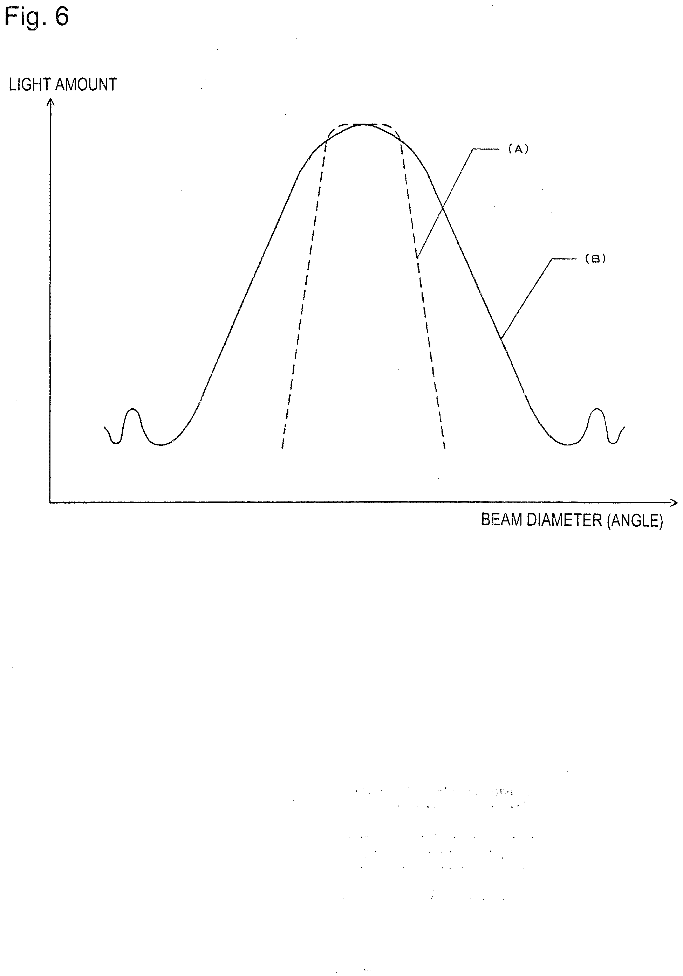

Figure 6 shows an example of a light amount distribution of scanning light. The vertical axis in Figure 6 represents the value of the light amount normalized by the peak value. Further, the horizontal axis represents the relative value of the beam diameter captured in the corresponding angle direction (e.g., the vertical or horizontal angle direction). Note that the line passing through the center of emitted light (or the center of received light) and the point of the maximum value of the light amount distribution is the optical axis of the scanning light.

(A) is the light amount distribution before passing through an optical aperture. (B) is the light amount distribution after passing through the optical aperture. When the optical aperture is a linear slit, the change in the light amount distribution shown in Figure 6 occurs in the direction orthogonal to the direction of extension of the slit. When the optical aperture is a pinhole (a circular hole), the change in the light amount distributionshown in Figure 6 occurs in all directions.

The change in the light amount distribution in Figure 6 occurs due to the diffraction phenomenon in passing through the optical aperture. As shown in (B) of Figure 6, passing through the optical aperture makes the gradient portion of the light amount distribution wider than before the passage. In other words, the skirt of the mountain-shaped beam shape becomes gentle, resulting in a beam shape with a skirt widened radially.

Although the beam waveforms (A) and (B) in Figure 6 are normalized by their respective peak values of light amount and thus shown at the same peak position, the actual peak value of light amount of the beam waveform (B) is lower than that of the beam waveform (A) to the extent of widening the skirt. Thus, the laser scanning light shown in (B) has a beam shape in which the peak of the light amount distribution lowers and the skirt of the beam is widened in the radial direction of the beam compared to the laser scanning light shown in (A).

The gradient portion of the light amount distribution is a portion where the light amount in the radial direction of the beam decreases monotonically or increases monotonically. The gradient portion can be defined as an area where the change in the light amount is a monotonic decrease or a monotonic increase in the range of 90% to 5% relative to the peak value.

The degree of spread of the skirt of the beam (B) is set to satisfy (effective prism diameter) < (beam diameter) at the expected minimum distance at the time of prism scanning. The minimum distance is the minimum value of the measurement range defined by the specifications of the laser scanner as a product. Laser scanners for surveying generally employ about several meters as the minimum distance.

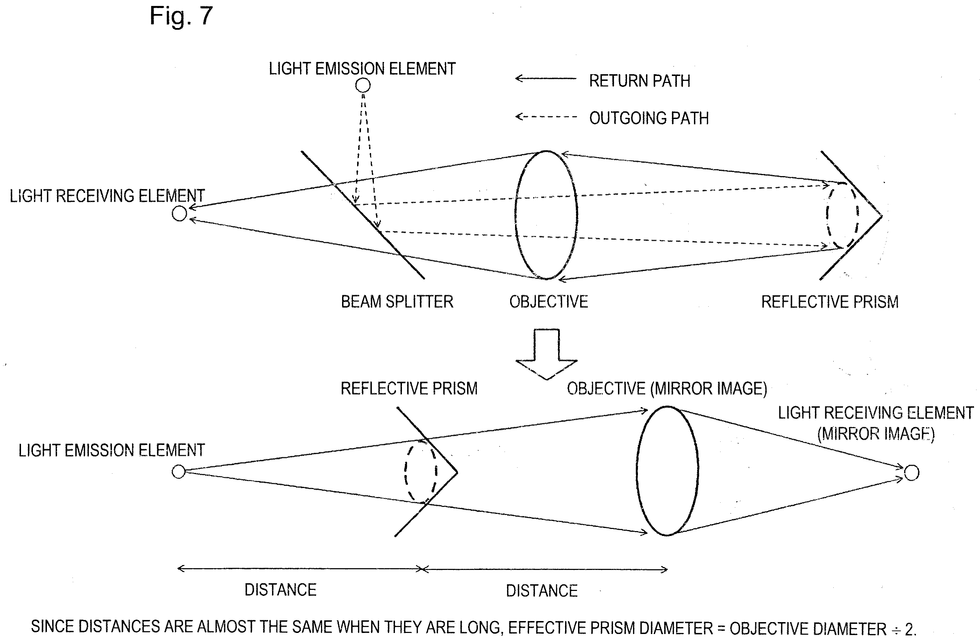

Here, the principle in Figure 7 determines the effective prism diameter. Note that the objective diameter in Figure 7 is the effective diameter of the objective lens of the light receiving system of the laser scanner 100. The beam diameter is the width of a light amount value distribution that is effectively detected as reflected light when a reflective prism is the object. In the case of Figure 6, the above beam diameter of the beam (B) is the range of the light amount distribution in the radial direction of the beam (the direction orthogonal to the optical axis) in which effective reflected light (detectable reflected light) is obtained from a reflector with the same reflectivity as the reflective prism at the expected minimum distance of the reflective prism. That is, the above beam diameter is defined as the range of the light amount in the direction orthogonal to the optical axis in which effective reflected light is obtained from a reflector with the same reflectivity as the reflective prism at the expected minimum distance.

The optical aperture is disposed inside the horizontal rotating part 103 at a position in front of the light emission part 112 on the optical axis in a state where insertion and non-insertion are selectable. The optical aperture is not utilized in step S103, and is inserted in front of the light emission part on the optical axis of the scanning light in step S105.

Based on the target scan in step S105, the direction of the optical center of the reflective prism from the laser scanner 100 is calculated based on a plurality of reflected light beams from the reflective prism. In this case, instead of equally treating the plurality of reflected light beams reflected by the reflective prism, the measured angle values of the reflection points on the reflective prism are weighted with their intensities of reflected light, and the center of gravity of them is calculated. This improves the measured position of the direction of the optical center of the reflective prism as viewed from the laser scanner 100.

Specifically, the following statistical processing calculation is performed. Here, let the direction of the optical center of the reflective prism as viewed from the laser scanner calculated by statistical calculation be (H0,V0). H is the horizontal angle of the horizontal rotating part 103. V is the vertical angle (the angle in the elevation or depression angle direction) of the vertical rotating part 104. Further, let the measured direction (the measured angle value) of a scanned point based on the scanning light reflected by the reflective prism as viewed from the laser scanner be (Hi, Vi) (i = 1, 2, 3, 4..), and let the intensity of received light for each scanning light beam be Ii. In this case, (H0, V0) is calculated from H0 = Σ (Ii × Hi) / Σ Ii and V0 = Σ (Ii × Vi) / Σ Ii. Here, Ii is a coefficient for weighting (a weight coefficient).

For the scanning light with a widened beam skirt shown in (B) of Figure 6, the skirt portion contains a scanning light component reflected by the reflective prism, and thus the actual number of reflection points from the reflective prism increases compared to the case of using the scanning light in (A) of Figure 6 even at the same scanning speed. Note that high reflectivity of the reflective prism allows for obtaining effective reflected light that can be detected as a point cloud even from the skirt of the beam.

When the beam (B) is employed, the closer the position of the optical axis of the scanning light is to the optical center of the reflective prism, the stronger (higher) the detected intensity of the reflected light tends to be. Further, the farther the position of the optical axis of the scanning light is from the optical center of the reflective prism, the weaker (lower) the detected intensity of the reflected light tends to be. This is because the farther the optical axis of the scanning light is from the optical center of the reflective prism, the larger the skirt portion of the beam that does not enter the reflective prism becomes.

Thus, in combination with the above effect of increasing the number of scanned points, the above weighting works effectively, thus increasing the resolution and accuracy of calculating the optical center of the reflective prism.

Suppose the scanning light with the light amount distribution shown in (A) of Figure 6 is used to perform the laser scan (target scan) on the reflective prism in step S105. In this case, the narrow width of the gradient portion of the light amount distribution decreases the number of scanned points and reduces the contribution of reflected light of the skirt portion of the beam in the calculation of the center of gravity described above, thus lowering the statistical accuracy compared to the case of using the beam (B).

Note that the scanning light with the widened gradient portion of the light amount distribution (the beam (B) in Figure 6) has a widened beam skirt due to the utilization of the diffraction phenomenon at the optical aperture, thus increasing the diameter of the scanned point (reflection point). Thus, using this scanning light for the entire circumferential scan in step S103 lowers the resolution. Further, the lowered density of light amounts results in failure to obtain effective reflected light for objects that are not highly efficient reflectors, such as reflective prisms. This leads to disadvantages such as missing point clouds or a decreased effective range. In this sense, the scanning light with the widened gradient portion of the light amount distribution shown in (B) is unsuitable for the entire circumferential scan in step S103.

Thus, in this embodiment, the laser scan in step S103 for obtaining point cloud data of objects to be scanned gives priority to the range, the reliable acquisition of a point cloud of the objects, and the resolution, and uses scanning light with the light amount distribution shown in (A) of Figure 6, which has a relatively narrow gradient portion in the light amount distribution. On the other hand, the target scan in step S105 for calculating the direction of the optical center of the reflective prism as viewed from the laser scanner by calculating the center of gravity uses the scanning light with the relatively wide gradient portion of the light amount distribution shown in (B) of Figure 6 in order to pursue the accuracy of calculation of the center of gravity related to the direction of the target (reflective prism).

The example above relies on one type of optical aperture for enlarging the gradient portion of the light amount distribution of the scanning light. Here, it is also possible to prepare a plurality of optical apertures with different aperture diameters, or an optical aperture with a variable aperture diameter. In this case, an aperture diameter of the optical aperture is selected according to the distance to the reflective prism obtained in step S103. Then, the size (width) of the gradient portion of the light amount distribution is selected according to the distance.

Specifically, this is done as follows. First, the appropriate relationship between the distance L from the laser scanner to the reflective prism and the size of the gradient portion of the light amount distribution of the scanning light is acquired in advance. Then, the distance L to the reflective prism is acquired in step S103. Then, in step S105, by referring to "the appropriate relationship between the distance L and the size of the gradient portion of the light amount distribution of the scanning light" described above, an aperture diameter of the optical aperture that allows for obtaining the optimal "size of the gradient portion of the light amount distribution" at the distance L is selected.

Step S106 follows step S105. In step S106, the exact directions of the reflective prisms 200 and 300 (the directions of the optical centers) as viewed from the laser scanner 100 are calculated based on the point cloud data of the reflective prisms 200 and 300 obtained in step S105 (step S106). This process calculates the directions of the optical centers of the reflective prisms from the laser scanner 100 by calculating the center of gravity of measured angles of a plurality of reflected light beams described above. The target direction calculation unit 123 performs this process. Further, the identification information of the reflective prisms 200 and 300 based on an image captured by the camera 106 is obtained at this time.

Next, the image data obtained in step S102 and the point cloud data obtained in step S103 obtained at this point of time are transmitted to the tablet computer 400 (step S107). Note that when a rescan is performed point cloud data obtained by the rescan is transmitted to the tablet computer 400. Further, in addition to the image data and the point cloud data, the position information and identification information of the reflective prisms 200 and 300, which are the targets that give reference points, are also transmitted to the tablet computer 400.

The tablet computer 400, which has received the above transmitted data, performs the following process. First, a point cloud data adjustment process (step S108) is performed. The point cloud data adjustment process in step S108 removes noise, and performs a process of replacing data of points determined to be abnormal data with data of points obtained by a rescan. Note that when no rescan is performed, only noise is removed in step S108.

Next, it is determined whether the point cloud data on which the point cloud data adjustment process has been performed requires a rescan (step S109). The rescan necessity determination unit 404 in Figure 4 performs this process.

When a rescan is required, the process proceeds from step S109 to step S110. When no rescan is required, a notification process (step S114) for notifying the worker 150 that "no rescan is required" is performed. In this case, the touch panel display 408 of the tablet computer 400 displays the content of the notification. The notification unit 405 performs this process.

In step S110, a notification of content regarding the need for a rescan is made. Here, the touch panel display 408 of the tablet computer 400 displays the content of the notification regarding a rescan. The notification unit 405 performs this process.

When the worker 150 provides an instruction to perform a rescan after the notification in step S110, the process proceeds from step S111 to step S112. Otherwise, the process ends. Note that when the automatic mode for automatically performing a rescan when there is any data abnormality is selected, the process proceeds from step S111 to step S112.

In step S112, a condition for a rescan corresponding to the content determined in step S109 is set. The rescanning condition setting unit 406 in Figure 4 performs this process. A condition for another laser scan is set using the position and posture of the laser scanner 100 in the entire circumferential scan in step S103. In other words, the same position and posture as those of the laser scanner 100 in the entire circumferential scan in step S103 are employed as the position and posture of the laser scanner 100 in setting a condition for a rescan.

Once a scanning condition for a rescan (a rescanning condition) is set, the rescanning condition is transmitted to the laser scanner 100 (step S113). The laser scanner 100, which has received the rescanning condition, performs another laser scan (a rescan) using the rescanning condition. The rescan may be a scan of a specific limited range rather than the entire circumferential scan. Note that when the targets have already been detected, steps S104 to S106 at the time of the rescan may be omitted. A rescan may be set not once, but a plurality of times.

When a rescan is performed, the range of points requiring a rescan included in the point cloud obtained by the entire circumferential scan (step S103) is replaced with the points newly obtained by the rescan in step S108 after the rescan. Information on the position and posture of the laser scanner 100 is common between the entire circumferential scan and the rescan. Thus, it is easy to perform the above replacement of points.

### (Post-Processing)

The data finally obtained in the flow in Figure 5 is the point cloud data, data of the detected intensity of each point, data of the directions of the reflective prisms 200 and 300 from the laser scanner 100 obtained by the target scan, their identification data, and the measurement time. At this stage, the position of the laser scanner 100 is unknown, and the positions of the point cloud data obtained by the entire circumferential scan in the absolute coordinate system are unknown (the coordinate system of the point cloud data obtained by the entire circumferential scan is the instrument point coordinate system with the laser scanner 100 as the origin).

Thus, the position and posture of the laser scanner 100 in the absolute coordinate system are determined using the resection method based on the known positions of the reflective prisms 200 and 300 in the absolute coordinate system and the directions of the reflective prisms 200 and 300 from the laser scanner 100 obtained by the target scan. This allows determination of the coordinate values of each point of the point cloud data obtained by the laser scanner 100 in the absolute coordinate system.

### (Advantage)

Employing a scanning condition suitable for a target scan when performing a target scan in step S105 improves the accuracy of measuring the directions of the targets (reflective prisms) as viewed from the laser scanner obtained in step S106. This can improve the accuracy of the positions of the point cloud data obtained in step S103 in the absolute coordinate system.

In other words, increasing the accuracy of the directions of the reflective prisms 200 and 300, which give the reference positions, from the laser scanner 100 improves the accuracy of calculating the position and posture of the laser scanner 100 that are calculated based on the resection method using the reference positions. This can improve the accuracy of the coordinate conversion of the point cloud data obtained in step S103 to the absolute coordinate system.

Further, after the completion of the laser scan, the scan result is checked immediately, and the confirmed content is fed back to the worker 150. This can reduce the time and effort for a survey using the laser scanner 100. For example, when the obtained point cloud data has a problem, a condition for a rescan to resolve the problem is set automatically, which can improve the efficiency of the work related to the rescan. Further, this rescan can eliminate inaccurate point cloud data, and thus can improve the accuracy of the finally obtained point cloud data.

The same position and posture as those of the laser scanner 100 in the entire circumferential scan in step S103 are employed as the position and posture of the laser scanner 100 in setting a condition for a rescan. This eliminates the need for alignment processing (matching processing) in identifying the correspondence between the point cloud data obtained by the entire circumferential scan in step S103 and the point cloud data obtained by the rescan. This makes it easy to replace anomalies and reduces the occurrence of errors at that time.

### 2. Second Embodiment

It is also possible to transmit the image data obtained in step S102 and the point cloud data obtained in step S103 to the tablet computer 400 at a stage before performing step S105 and perform the processes in and after step S108 at a stage before performing step S105. This can improve the efficiency of the processing. Further, since it is reliably determined whether a rescan is required before the laser scanner 100 is moved (relocated), it is possible to efficiently perform a rescan and process data.

Suppose that, in the flow of Figure 5, the work is regarded as completed after step S107, the laser scanner 100 is powered off, and the laser scanner 100 is relocated. In this case, when a rescan is required later, it is necessary to obtain data of the position and posture of the laser scanner 100 again during the rescan. Further, it is necessary to perform alignment between the point cloud data obtained by the rescan and the point cloud data obtained at the beginning (the process of aligning the coordinate systems). This causes problems such as an increase in the workload and the occurrence of errors during the alignment processing, resulting in inefficiency. According to this embodiment, performing step S109 at a stage before step S105 suppresses the occurrence of the above problems.

The result of the entire circumferential scan in step S103 may be transmitted at the end of step S103 or at the same time as the scan during execution of step S103. In the latter case, it is possible to transmit the point cloud data obtained by the entire circumferential scan to the tablet computer 400 at earlier timing.

This embodiment can employ an aspect in which the target scan can only be performed after the completion of determination of whether a rescan related to the point cloud data obtained by the entire circumferential scan in step S103 is unnecessary. This prevents a problem that, even though there are data anomalies or other troubles, the laser scanner 100 is mistaken to have completed the processing and is relocated.

### 3. Third Embodiment

When the rescanning condition set in step S112 in Figure 5 is the same (or can be regarded as the same) as the scanning condition for the target scan in step S105, the point cloud data of the target scan in step S105 is requested from the laser scanner 100. In this case, the point cloud data of the target scan in step S105 is employed as the data of the rescan. This allows for saving the effort of a rescan in the laser scanner 100.

### 4. Fourth Embodiment

GNSS is used to measure the approximate position of the laser scanner 100 in the absolute coordinate system. This measurement may contain errors, and thus may be simple measurement, such as measurement using the GNSS function of a smartphone.

This measurement makes it possible to find the approximate positional relationship between the laser scanner 100 and the reflective prisms 200 and 300 and to identify the reflective prisms 200 and 300 as viewed from the laser scanner 100.

### 5. Fifth Embodiment

An example of a case where a notable event is found in the point cloud in determining whether a rescan is required will be described. Suppose that, for example, the entire circumferential scan in step S103 has produced an area where the positions of a large number of points distributed in a plane are dispersed in the direction perpendicular to the plane. In this case, the surface to be scanned is expected to be an uneven surface. In such cases, a rescan is performed under a condition with increased scan density compared to the entire circumferential scan in order to obtain a more detailed state of unevenness.

In the above case, the state of dispersion of the positions of the above distributed points is determined with a threshold. Then, a point cloud in which a notable event is detected is extracted based on the result of this determination.

### 6. Sixth Embodiment

There is a technique for detecting deformations (e.g., cracks, corrosion, and peeling) on a concrete surface using a laser scan. An example of applying the present invention to this technique will be described. In this case, a determination condition is set in advance such that, when points of a locally concave portion are detected in a point cloud constituting a smooth surface obtained in the entire circumferential scan in step S103, the area (range) is determined as a range to be rescanned. Further, the rescan is configured in advance to be performed under a condition with increased scan density compared to the first entire circumferential scan (step S103).

### 7. Seventh Embodiment

An example in which a point cloud that satisfies a predetermined condition as a condition for determining that a rescan is required is determined to be rescanned will be described. For example, it is possible to use settings such as a setting in which only vertical walls are determined to require a rescan, or a setting in which only planes facing the vertical downward direction are determined to require a rescan. Suppose a case in which, for example, in a laser scan for a bridge, vertical planes of bridge piers are desired to be scanned preferentially with high density in detail. In this case, in the determination in step S109, the condition for the determination is set so that only vertical surfaces are selected as objects to be rescanned. In other words, settings are made in advance such that point clouds of surfaces facing a certain direction are determined as point clouds to be rescanned.

### 8. Eighth Embodiment

Instead of replacing point cloud data requiring a rescan with point cloud data obtained by a rescan, it is also possible to perform a process of overlapping the former point cloud data and the latter point cloud data with each other. The positions of the points in the former point cloud data do not necessarily coincide with the positions of the points in the latter point cloud data. Thus, overlapping both pieces of point cloud data with each other can increase the density of the point cloud.

### 9. Ninth Embodiment

The following will describe an example of determining "whether a rescan is required" in step S109. Here, a depth camera is used as the camera 106. A depth camera is an imaging device (or techniques therefor) that can acquire information on image-capturing objects in the depth direction (distance information from the image-capturing viewpoint). Techniques for obtaining depth information include a plurality of methods. Here, a depth camera is used, which utilizes a scheme for predicting distance information of objects appearing in a captured image using a neural network (an AI model for depth estimation) utilizing deep learning. This scheme acquires (predicts) the distance information of the image-capturing objects by processing the captured image with software.

The following will describe an approach for obtaining distance information from a captured image. First, various objects appearing in an image captured by the camera 106 are extracted from the captured image. For example, individual objects, such as road surfaces, walls, roofs, handrails, pipes, columns, overhead lines, road surfaces, and vehicles, are identified and extracted. This process is performed using image processing software. Further, images of the extracted objects are classified into categories, such as road surfaces, walls, roofs, handrails, pipes, columns, overhead lines, road surfaces, and vehicles.

Then, depth information (distance information) of each extracted object is acquired. Here, the depth information is information on the distance from the optical origin (center of projection) of the camera 106 to the object.

The image captured by the camera 106 is a monocular image. Here, a neural network (an AI model for depth estimation) utilizing deep learning is used to predict the distance information of objects appearing in the captured image, which is a monocular image, creating a depth map (distance map) of the captured image. In the depth map, distance information of objects appearing in the captured image (the distances from the optical origin of the camera 106) is expressed (converted into data) with shades and color tones.

The depth map integrates image information of each extracted object with the above depth information (distance information), and provides the depth information (distance information) of each object in the captured image.

This embodiment compares the above depth map with a point cloud image of point cloud data obtained by the laser scanner 100. The point cloud image is an image drawn with points in viewing the point cloud obtained by the laser scan from the viewpoint of the laser scan. Further, a point cloud image in which a change in the shade and color tone is given to the point image according to the distance information of each point is created here. The known relationship between the positions and postures of the optical system of the laser scanner 100 and the optical system of the camera 106 allows determination of the correspondence between the above depth map and the point cloud image.

Here, the distance data estimated from the image is compared with the distance data obtained by the laser scan. In this comparison, the states of distribution of distances are compared with each other. Specifically, for a specific area to be surveyed, the distribution of distance information shown by the depth map is compared with the distribution of distance information shown by the point cloud image. In other words, for a corresponding part between the depth map and the point cloud image, the state of change in the far and near relationship shown by the depth map is compared with the state of change in the far and near relationship shown by the point cloud image.

The ranging value of a laser-scanned point with abnormal distance information due to multiple reflection or other factors is longer than the normal distance. Thus, when the distribution of the distances of points in the point cloud image is compared with the distribution of the distances of the image-capturing objects in the depth map, the two have a difference in the portion of the above anomalies. By evaluating this difference, it is determined whether the laser-scanned point cloud contains anomalies.

Suppose that, for example, there are two target parts (a target part 1 and a target part 2) two-dimensionally adjacent to each other as viewed from the viewpoint. Further, suppose that these two target parts are in a far and near relationship in which the target part 1 is in the foreground and the target part 2 is in the background. Here, suppose that the laser scan data for the target part 1 contains incorrect distance information due to multiple reflection or other factors. In this case, the depth map and the point cloud image have a difference in the far and near relationship between the target part 1 and the target part 2. In some cases, the far and near relationship may be reversed.

By evaluating the above difference in the far and near relationship, it is determined whether the point cloud image contains points with abnormal distance information, that is, whether the laser-scanned point cloud contains anomalies.

The display of the tablet computer 400 displays the result of the above determination, thereby notifying it to the worker 150. A rescan may be performed automatically, but may also be in the form in which the worker 150 performs operations based on the above notified content.

The position information of scanned points affected by multiple reflection of scanning light is erroneous measured values, and is desirably eliminated in some way. This embodiment can determine whether the point cloud obtained by the laser scan contains points with abnormal distance information by comparing the distance information of the image-capturing objects shown by the depth map created based on the captured image with the distance information of the points actually measured by the laser scan.

### 10. Tenth Embodiment

It is also possible to employ an aspect in which the process in step S109 is replaced with "the presence or absence of a defective point cloud". In this case, the unit with the reference numeral 404 in Figure 4 is a "defective point cloud presence/absence determination unit". For example, even with no rescan, replacing an improper point cloud with a point cloud obtained from a laser scanner set up at another instrument point can ensure the accuracy of the finally obtained point cloud in some cases. Since this case requires no rescan, the improper point cloud that needs to be replaced with another proper point cloud is determined as a "defective point cloud".

### 11. Eleventh Embodiment

In step S105, it is possible to employ an aspect in which an optical aperture is only inserted into the optical axis without changing the angular interval between scanning light beams in step S103, that is, without changing the horizontal rotation speed of the horizontal rotating part 103 and the vertical rotation speed of the vertical rotating part 104.

In this case, although the density of the optical axes of the scanning light beams on a scanning object surface at a certain distance is the same, the number of reflected light beams from the reflective prism (the number of reflection points) increases compared to the case of employing the condition in step S103. This is because reflected light resulting from the widened skirt portion of the beam reflecting off the reflective prism is measured as a reflection point. In other words, when a reflective prism is used as an object, employing the beam (B) in Figure 6 can increase the number of scanned points compared to the case of employing the beam (A). In other words, it is possible to obtain the effect substantially similar to that in the case of increasing the scanning density.

Thus, as long as the accuracy of calculating the direction of the optical center of the reflective prism from the laser scanner by calculating the center of gravity in step S106 can be ensured, it is also possible to use an aspect of employing, in step S105, a scanning condition under which the gradient portion of the light amount distribution of the scanning light is enlarged using the optical aperture without changing the angular interval between scanning light beams in step S103.

### 12. Twelfth Embodiment

The following will describe an example of a case where the beam cross-section of the scanning light used in step S105 (the cross-section as viewed from the optical axis direction) has an elongated shape, such as an oval shape. For example, due to the light emission element or the optical system of the light emission part, or when a slit is used as an optical aperture, the shape of the beam cross-section of the scanning light may be an elongated shape, such as an oval shape.

For example, suppose that the reflective prisms are arranged in a substantially horizontal direction as viewed from the laser scanner. Then, suppose that the beam cross-section of the scanning light in the horizontal direction has a vertically elongated shape (the V angle (vertical angle) direction is longitudinal), and the gradient portion of the light amount distribution spreads in this vertical elongation direction. In this case, since the spread of the beam in the horizontal direction (H angle direction) is relatively small, the horizontal rotation speed of the horizontal rotating part 103 is adjusted (decreased) to intentionally narrow the interval between scanning light beams in the horizontal direction, thus increasing the density of optical axes per unit horizontal angle.

This prevents uneven numbers of reflection points obtained from the reflective prism in the horizontal and vertical angle directions. In this aspect, in the horizontal angle direction, adjusting the interval between the optical axes of the scanning light beams ensures the number of reflection points on the reflective prism. Further, in the vertical angle direction, widening the gradient portion of the light amount distribution of the scanning light ensures the number of reflection points on the reflective prism.

The reverse case of the above example will be described. Note that it is supposed that the reflective prisms are arranged in a substantially horizontal direction as viewed from the laser scanner. In this case, suppose that the beam cross-section of the scanning light in the horizontal direction has a horizontally elongated shape (an elongated shape extending horizontally), and the gradient portion of the light amount distribution spreads in this horizontal elongation direction. In this case, since the spread of the beam in the vertical direction is relatively small, the vertical rotation speed of the vertical rotating part 104 is adjusted (decreased) to intentionally narrow the interval between scanning light beams in the vertical angle direction, thus increasing the density of optical axes per unit vertical angle. Note that increasing the frequency of emitting the scanning light can also narrow the interval between scanning light beams in the vertical angle direction.

The following will describe an example of a specific scanning condition. As described in the first embodiment, the laser scan in step S105 prefers a condition under which there are five or more reflection points in the direction in which the gradient portion of the light amount distribution is widened. However, this is the case when the effect of improving the accuracy in statistical processing using the gradient portion of the light amount distribution can be obtained. Since the utilization of the gradient portion of the light amount distribution cannot be expected so much in the direction orthogonal to the longitudinal direction of the beam cross-section with the elongated shape described above, it is necessary to narrow the interval between scanning light beams to further increase the number of reflection points.

Although depending on the degree of elongation of the shape of the beam cross-section (e.g., the ratio of the major axis to the minor axis when it is an ellipse), the interval between scanning light beams in the direction orthogonal to the longitudinal direction of the beam cross-section with an elongated shape is preferably at least twice the interval between scanning light beams in the longitudinal direction only as a guide. The condition for the laser scan in step S105 is adjusted to satisfy this condition.

Specifically, one or more of the rotation speed of the horizontal rotating part 103, the rotation speed of the vertical rotating part 104, and the frequency of emitting scanning light are adjusted to satisfy the above condition at the position of the reflective prism or at the expected maximum distance.

### 13. Thirteenth Embodiment

In the basic structure of the laser scanner 100 shown in Figure 2, a rotating mirror in the vertical rotating part 104 reflects scanning light incident from the horizontal direction to perform a laser scan in the vertical angle direction. In this form, when the beam cross-section of the scanning light (the cross-section as viewed from the direction of the optical axis) has an elongated shape (e.g., an elliptical shape), the longitudinal direction of the beam cross-section rotates in the vertical angle direction.

This rotation may affect the calculation of the direction of the reflective prism using statistical processing. In other words, when the beam cross-section has an elongated shape, the longitudinal direction in which the beam diameter is widened is the direction in which the gradient portion of the light amount distribution of the scanning light is widened, and that direction is an effective beam component in the statistical calculation. On the other hand, the gradient portion of the light amount distribution in the direction orthogonal to the longitudinal direction is narrow and contributes less to the statistical processing calculation. Thus, the interval between scanning light beams is narrowed in the direction orthogonal to the longitudinal direction of the beam cross-section of the scanning light that hits the reflective prism to prevent a difference in the effectiveness of the statistical processing calculation depending on the direction. Specifically, when the beam spreads in the V direction at the reflective prism, the interval between scanning light beams in the H direction is narrowed. Conversely, when the beam spreads in the H direction at the reflective prism, the interval between scanning light beams in the V direction is narrowed.

The following will describe an example. Here, the scanning condition in step S105 is adjusted to correspond to the rotation of the beam cross-section of the scanning light described above. As a premise, suppose that the beam cross-section of the scanning light has an elongated shape (e.g., an elliptical shape). Further, suppose that the relationship between the vertical angle of the optical axis of the scanning light and the longitudinal direction of the beam cross-section is known in advance. In addition, suppose that the gradient portion of the light amount distribution is widened in this longitudinal direction.

First, the approximate direction of the target reflective prism is acquired from the result of step S103. Next, the longitudinal direction of the shape of the beam cross-section of the scanning light in that direction is acquired. Then, the H angle component (the component in the horizontal angle direction) and the V angle component (the component in the vertical angle direction) of the above longitudinal direction are calculated. Then, the interval between scanning light beams in the H angle direction and the interval between scanning light beams in the V angle direction are set based on the above calculated H and V angle components.

For example, when the contribution of the longitudinal direction of the beam cross-section in the H angle direction is large (i.e., the beam in the elongated shape tends to tilt to the side), the beam component in the V angle direction is relatively small, resulting in setting a condition for narrowing the interval between scanning light beams in the V angle direction. Specifically, the speed of rotating the vertical rotating part 104 is decreased, and/or the frequency of emitting the scanning light is increased.

Conversely, when the contribution of the longitudinal direction of the beam cross-section in the V angle direction is large (i.e., the beam in the elongated shape tends to be vertical), the beam component in the H angle direction is relatively small, resulting in setting a condition for narrowing the interval between scanning light beams in the H angle direction. Specifically, the speed of rotating the horizontal rotating part 103 is decreased, and/or the frequency of emitting the scanning light is increased.

This embodiment can be understood as an invention in which, in a laser scanning method including performing: a first laser scan on a range including a plurality of reflective prisms with a known position using a laser scanner; detection of the plurality of reflective prisms based on scan data obtained by the first laser scan; and a second laser scan on the plurality of reflective prisms in a state where a gradient portion of a light amount distribution of scanning light is widened compared to a case of the first laser scan, a shape of a beam cross-section of scanning light in the second laser scan is an elongated shape, the gradient portion of the light amount distribution is widened in a direction of the elongated shape, a direction of the reflective prism as viewed from the laser scanner based on the first laser scan is acquired, a longitudinal direction of the elongated shape is acquired based on the direction, and a scanning condition for the second laser scanner is set based on the longitudinal direction.

As described above, when the beam cross-section of the scanning light has an elongated shape, the rotation of the beam cross-section of the scanning light in the laser scan in step S105 may lower the accuracy of calculating the direction of the reflective prism as viewed from the laser scanner by statistical processing. This embodiment addresses this problem by narrowing the interval between scanning light beams in the direction orthogonal to the longitudinal direction of the beam cross-section. In other words, when the beam cross-section of the scanning light has an elongated shape, the interval between scanning light beams in the direction orthogonal to the longitudinal direction of the elongated shape is adjusted to prevent a difference in accuracy between the H and V angle directions in calculating the direction of the reflective prism by statistical processing. Specific adjustments are made based on the content described at the end of the thirteenth embodiment.

### 14. Fourteenth Embodiment

It is also possible to apply the present invention to an instrument point and backsight point method using a single reflective prism that gives a reference point. In this case, a laser scanner is set up with the position of a known point A as the instrument point, and an entire circumferential scan and a target scan (prism scan) are performed with a reflective prism set up at a known point B as an object to be scanned.

In the target scan, a laser scan is performed on the reflective prism set up at the known point B as the backsight point. The scanning condition for the target scan is the same as that in other embodiments. Here, the statistical calculation described in the first embodiment using the result of the target scan allows for obtaining the direction of the reflective prism as viewed from the laser scanner. Since the position of the laser scanner is known as the known point A and the position of the reflective prism is also known as the known point B, the posture of the laser scanner in the coordinate system used here is calculated.

Knowing the position and posture of the laser scanner allows for giving coordinates to the point cloud data obtained in the entire circumferential scan. For example, suppose that the positions of the known point A and the known point B have been given in the absolute coordinate system. This gives the position (known point A) and posture of the laser scanner in the absolute coordinate system, thus giving coordinates in the absolute coordinate system to the point cloud data obtained in the entire circumferential scan.

### 15. Fifteenth Embodiment

It is also possible to employ aspects in which the plurality of embodiments described above are combined.

### [Reference Signs List]

- 100: laser scanner
- 101: tripod
- 102: base part
- 103: horizontal rotating part
- 104: vertical rotating part
- 105: optical part
- 106: camera
- 150: worker
- 200: reflective prism (target that gives reference point)
- 300: reflective prism (target that gives reference point)
- 400: tablet computer

## Claims

1. A laser scanning method comprising performing:
a first laser scan on a range including a reflective prism with a known position using a laser scanner;
detection of the reflective prism based on scan data obtained by the first laser scan; and
a second laser scan on the reflective prism in a state where a gradient portion of a light amount distribution of scanning light is widened compared to a case of the first laser scan.

2. The laser scanning method according to claim 1, wherein the second laser scan is performed on the reflective prism in a state where scanning density is increased compared to the case of the first laser scan.

3. The laser scanning method according to claim 1 or 2, wherein
the second laser scan is performed under a condition that the reflective prism reflects a plurality of scanning light beams, and
by calculating a center of gravity of directions of the reflective prism as viewed from the laser scanner that are weighted with reflection intensities of the plurality of scanning light beams, a direction of an optical center of the reflective prism as viewed from the laser scanner is calculated.

4. The laser scanning method according to any one of claims 1 to 3, wherein laser scanning light in the second laser scan is obtained by passing light in the first laser scan through an optical aperture.

5. The laser scanning method according to any one of claims 1 to 4, wherein laser scanning light in the second laser scan has a beam shape in which a peak of a light amount distribution lowers and a skirt of a beam is widened in a radial direction of the beam compared to laser scanning light in the first laser scan.

6. The laser scanning method according to any one of claims 1 to 5, wherein laser scanning light in the second laser scan is capable of detecting reflected light from the reflective prism in a state where an optical axis of the laser scanning light deviates from a reflection surface of the reflective prism.

7. The laser scanning method according to any one of claims 1 to 6, wherein a condition is set such that five or more reflection points, on the reflective prism, of laser scanning light in the second laser scan in a direction in which the gradient portion of the light amount distribution of the laser scanning light is widened are obtained at an expected maximum distance from the laser scanner to the reflective prism.

8. The laser scanning method according to any one of claims 1 to 7, wherein
at an expected minimum distance from the laser scanner to the reflective prism,
a beam diameter of scanning light in the second laser scan is larger than an effective prism diameter of the reflective prism,
the effective prism diameter is equal to an objective diameter of the laser scanner divided by 2, and
the beam diameter of the scanning light is defined as a range of light amount in a direction orthogonal to an optical axis in which effective reflected light is obtained from a reflector with the same reflectivity as the reflective prism at the minimum distance.

9. The laser scanning method according to any one of claims 1 to 8, wherein
a beam cross-section of laser scanning light in the second laser scan as viewed from a direction of an optical axis has an elongated shape, and
an interval between beams of the scanning light in a direction orthogonal to a longitudinal direction of the elongated shape of the laser scanning light at the reflective prism is narrower than an interval between beams of the laser scanning light in the longitudinal direction.

10. The laser scanning method according to any one of claims 1 to 9, wherein
a captured image of an object of the first laser scan is acquired,
a depth map including predicted distance information of the object in the captured image from an image-capturing viewpoint is created,
a point cloud image is created, the point cloud image being an image drawn by one or more points in viewing a point cloud obtained by the first laser scan from a viewpoint of the laser scan, and
a point with abnormal distance information is detected by comparing a distribution of the predicted distance in the depth map with a distribution of a ranging value of each point in the point cloud image.

11. A program read and executed by a computer, the program causing the computer to perform:
a first laser scan on a range including a reflective prism with a known position using a laser scanner;
detection of the reflective prism based on scan data obtained by the first laser scan; and
a second laser scan on the reflective prism in a state where a gradient portion of a light amount distribution of scanning light is widened compared to a case of the first laser scan.

12. A laser scanning device comprising:
a target detection unit that, based on scan data obtained by a first laser scan on a range including a reflective prism with a known position using a laser scanner, detects the reflective prism; and
a scanning condition setting unit that sets a condition for a second laser scan on the reflective prism in a state where a gradient portion of a light amount distribution of scanning light is widened compared to a case of the first laser scan.

13. A laser scanning method comprising performing:
a first laser scan using a laser scanner;
capturing of a captured image of an object of the first laser scan;
creation of a depth map including predicted distance information of the object in the captured image from an image-capturing viewpoint;
creation of a point cloud image, the point cloud image being an image drawn by one or more points in viewing a point cloud obtained by the first laser scan from a viewpoint of the laser scan; and
detection of a point with abnormal distance information by comparing a distribution of the predicted distance in the depth map with a distribution of a ranging value of each point in the point cloud image.

14. A program read and executed by a computer, the program causing the computer to perform:
acquisition of data of a first laser scan using a laser scanner;
acquisition of data of a captured image of an object of the first laser scan;
creation of a depth map including predicted distance information of the object in the captured image from an image-capturing viewpoint;
creation of a point cloud image, the point cloud image being an image drawn by one or more points in viewing a point cloud obtained by the first laser scan from a viewpoint of the laser scan; and
detection of a point with abnormal distance information by comparing a distribution of the predicted distance in the depth map with a distribution of a ranging value of each point in the point cloud image.
